# EUROPÄISCHE PATENTSCHRIFT

(11) **EP 1 081 897 B1**
(45) Veröffentlichungstag und Bekanntmachung des Hinweises auf die Patenterteilung: **26.03.2003**
(21) Anmeldenummer: 99890285.2
(22) Anmeldetag: 03.09.1999
(51) Int. Cl.: H04L 12/28

(54) **Übertragungssystem zur Ferneinstellung von Teilnehmergeräten**
Transmission system for a remote adjustment of subscriber terminals
Système de transmission pour le réglage à distance des terminaux d'abonnés

(43) Veröffentlichungstag der Anmeldung: 07.03.2001
(73) Patentinhaber: ERICSSON AUSTRIA AKTIENGESELLSCHAFT, 1121 Wien (AT)
(72) Erfinder: Beda, Endre, Dipl.Ing., 1120 Wien (AT); Hazdra, Michael, 1160 Wien (AT)
(74) Vertreter: Gibler, Ferdinand, Dipl.Ing. Dr. techn.

(56) Entgegenhaltungen:
- EP-A- 0 637 157
- SONY, PHILIPS, HITACHI, SHARP, MATSUSHITA, THOMSON, TOSHIBA, GRUNDIG: "The HAVi Specification: Specification of the Home Audio/Video Interoperabilty (HAVi) Architecture" 19. November 1998 (1998-11-19) XP002116332 * Seite 2 - Seite 24 * * Seite 120 - Seite 150 *

## Beschreibung

Die Erfindung betrifft ein Verfahren zum Konfigurieren eines elektronisch steuerbaren Teilnehmergerätes, welchem zumindest ein Satz von Daten und programmierten Funktionen zugeordnet ist, zur Kommunikation mit einem zentralen Steuerungsrechner, der über ein Kommunikations-Netzwerk mit mehreren gleichartigen Teilnehmergeräten verbindbar und über den der Daten- und Funktionssatz jedes Teilnehmergeräts veränderbar ist, wobei ein oder mehrere Sätze von Daten und jeweils einer programmierten Funktion zu untergeordneten Sub-Programm-Objekten zusammengefaßt und gespeichert sind, die unabhängig voneinander zu einem oder mehreren verwalteten Gesamt-Objekten konfigurierbar sind, das bzw. die über den Steuerungsrechner steuerbar ist bzw. sind.

Bekannte Systeme der vorstehend beschriebenen Art dienen der Wartung, der Überwachung und Steuerung von verschiedenen Teilnehmergeräten mit Hilfe eines zentralen Steuerungsrechners. Das die Verbindung zwischen Steuerungsrechner und Teilnehmergerät ermöglichende Kommunikations-Netzwerk kann sich dabei aller technisch umsetzbaren Formen von Übertragungsverfahren und -arten bedienen, die sowohl Sprach-, Daten- und Bild-Übertragungen oder Kombinationen davon bzw. Multimedia-Übertragungen umfassen. Auch dem Netzwerk-Aufbau und der Netzwerk-Struktur sind keine Grenzen gesetzt.

Es existieren bereits Lösungen mit vereinheitlichten Teilnehmergeräten, die als sogenannte "managed objects" (verwaltete Objekte) im Standard ITU-T X.730 festgelegt sind, die einen Satz von Daten und programmierbaren Funktionen über einen Steuerungsrechner steuern. Die Teilnehmergeräte werden dabei jeweils durch Daten und programmierte Funktionen definiert, sodaß jede als Programm vorhandene Funktion über den zentralen Steuerungsrechner von einem fernen Standpunkt aus überwacht, überprüft oder beeinflußt werden kann.

In den bisher bekannten Anwendungen wird eine Vorrichtung, z.B. eine Kommunikations- oder Nebenstellenanlage, in ihrer Gesamtheit bzw. eine funktionelle Einheit als ein oder mehrere verwaltete Objekte (managed objects) betrachtet. Dabei müssen gleiche Funktionen für unterschiedliche Geräte (Objekte) jeweils immer gesondert programmiert werden, weil sie innerhalb eines Objekts immer wieder neu festgelegt werden. Eine Änderung von Funktionen erfordert entsprechende Änderungen in mehreren Bereichen des Übertragungssystems. So muß jede Änderung und Hinzufügung an einem Teilnehmergerät auch im zentralen Steuerungsrechner bzw. dessen Programm vorgenommen werden.

In der EP 0 637 157 A2 ist ein Steuersystem für Multimedia-Geräte, wie z.B. CD-ROM-Abspielgeräte, Scanner, Verstärker oä. angegeben, bei dem eine Vielzahl von peripheren Geräten als Objekte dargestellt sind, die mittels einer an einer gemeinsamen Übertragungsleitung angeschlossenen Steuervorrichtung steuerbar sind. Die Objektdaten zur Steuerung der einzelnen peripheren Geräten sind jeweils in den Geräten selbst gespeichert. Die Steuervorrichtung lädt die Objektdaten bei Bedarf von dem jeweiligen peripheren Gerät herunter, um ein dem peripheren Gerät entsprechendes Objekt zu generieren und um eine Anzeige zur Steuerung des peripheren Geräts bereitzustellen, über welche die peripheren Geräte zentral und unter Zuhilfenahme der zugeordneten Objektdaten gesteuert werden können, ohne daß eine spezielle Anwendungs-Software oder ein spezieller Gerätetreiber erforderlich wären. Eine Steuerung wird nur durch das Verbinden der Geräte-Objekte mit der Steuervorrichtung vorgenommen. Jede Objektdarstellung eines peripheren Geräts umfaßt eine individuelle Klassen-Bibliothek, in der verschiedene Objekte abgelegt sind und die nach einem Verbindungsaufbau zwischen der Steuervorrichtung und dem peripheren Gerät an die Steuervorrichtung übertragen wird. Innerhalb der Steuervorrichtung ist eine gemeinsame Klassen-Bibliothek vorgesehen, die eine Gruppe von Basis-Komponenten für eine Benutzeroberfläche beinhaltet. Es erhöht sich die Anzahl der individuellen Klassen-Bibliotheken jedes Mal, wenn ein weiteres peripheres Gerät an das System angeschlossen wird und seine individuelle Klassen-Bibliothek an die Steuervorrichtung übermittelt.

Ein einem Heim-Netzwerk zugrundeliegendes Steuersystem offenbart das Dokument "The HAVi Specification", bei dem elektronische Geräte wie DVD-Player, Camcorder und TV-Geräte über ein Netzwerk miteinander verbunden sind und die Geräte sich bei ihrer Verbindung mit dem Netzwerk automatisch selbst konfigurieren und sich in dieses integrieren.

Eines der Geräte, z.B. ein TV-Gerät kann als Steuervorrichtung für die anderen am Netzwerk angeschlossenen Geräte dienen. Alle Funktionen eines Geräts werden durch Objekte definiert, auf die jeweils über eine definierte Schnittstelle zugegriffen werden kann. Alle im System verwendeten Objekte werden aber individuell bezeichnet und in einem zentralen Register geführt, von wo sie aus abfragbar sind. Es sind keine vereinheitlichenden Maßnahmen getroffen, welche die Kombination von mehreren vorbestimmten Unter-Objekten zu einem Gesamtobjekt beinhalten.

Aufgabe der Erfindung ist es, ein Verfahren der eingangs genannten Art anzugeben, mit dem eine Vereinfachung bei der Steuerung, Überwachung und Wartung der Teilnehmergeräte erreicht werden kann.

Weitere Aufgabe der Erfindung ist es, ein Verfahren anzugeben, mit dem eine Vereinheitlichung der Programmierung von bestimmten immer wiederkehrenden Funktionen der Teilnehmergeräte möglich ist, und mit dem eine Änderung einer Funktion bzw die Hinzufügung einer neuen Funktion auf technisch einfache Art realisierbar ist.

Eine weitere Aufgabe der Erfindung besteht darin, das Austauschen oder das Hinzufügen eines Teilnehmergeräts mit relativ geringem Aufwand zu ermöglichen.

Erfindungsgemäß wird dies dadurch erreicht, daß der Steuerungsrechner zunächst eines der verwalteten Gesamt-Objekte des zu konfigurierenden Teilnehmergeräts kontaktiert und Auskunft über dessen Daten verlangt, und daß der Steuerungsrechner nach Erhalt der Daten das verwaltete Gesamt-Objekt kontaktiert und Auskunft über dessen Funktionen verlangt.

Gleiche Funktionen bzw. Eigenschaften unterschiedlicher Teilnehmergeräte können damit als untergeordnete Sätze von Daten und programmierten Funktionen ein einziges Mal definiert und dann für alle weiteren Teilnehmer weiterverwendet werden. Die untergeordneten Sätze von Daten und programmierten Funktionen können somit wie bei einem Baukastensystem zusammengefügt und je nach Teilnehmergerät beliebig variiert werden. Dadurch kann auf die Programmierung eines eigenen Daten- und Funktionssatzes für jeweils ein Teilnehmerendgerät verzichtet werden. Es ergeben sich kürzere Systementwicklungszeiten.

Es kann vorgesehen sein, daß die Teilnehmergeräte Kommunikationsanlagen oder. deren Teile, z.B. Telephon-Nebenstellenanlagen, analoge Vermittlungsanlagen, Datenvermittlungsanlagen, Multimedia-Übertragungseinrichtungen oder Geräte mit Intraoder Internet-Anschluß sind.

Jede von der Kommunikationsanlage ausführbare Funktion kann als untergeordneter Satz von Daten und Funktionen gespeichert und bei Bedarf in entsprechender Weise für jede Art von Kommunikationsanlage verwendet werden. Dabei können bestimmte Funktionen auch als gesperrte untergeordnete Daten- und Funktionssätze im Teilnehmergerät gespeichert sein und auf Anfrage gegebenenfalls unter Entrichtung einer Lizenzgebühr durch den Besitzer über den zentralen Steuerungsrechner aktiviert werden. So könnte beispielsweise die standardmäßig gesperrte Funktion "Identifizierung von Anrufern" für bestimmte Besitzer von Nebenstellenanlagen auf Wunsch freigegeben werden, indem über den zentralen Steuerungsrechner ein geeigneter Steuerbefehl über das Datenübertragungsnetzwerk übermittelt wird.

Es können die Teilnehmergeräte Haushaltsgeräte, z.B. Fernsehgeräte, Videorecorder, Stereoanlagen o.ä. sein. Für jedes Haushaltsgerät können bestimmte Funktionen wie Ein- und Ausschalten, Datum/Uhrzeit-Einstellung, Lautstärkeregelung, o.ä. durch untergeordnete Daten- und Funktionssätze definiert sein, sodaß für ein neu hinzukommendes Haushaltsgerät nur eine geeignete Zusammenstellung der untergeordneten Sätze gewählt werden braucht.

In weiterer Ausbildung der Erfindung kann vorgesehen sein, daß, jeweils nachdem der Steuerungsrechner das verwaltete Gesamt-Objekt kontaktiert und Auskunft über dessen Daten verlangt hat, folgende Schritte durchgeführt werden:
a) Ein für das verwaltete Gesamt-Objekt zuständiger Objekt-Agent veranlaßt das Zurücksenden einer Liste der vorhandenen, untergeordneten Datenobjekte und der zugehörigen Adressen
b) Der Steuerungsrechner kontaktiert alle Datenobjekte einzeln bzw. entsprechend einer Liste von Datenobjekten und fragt deren Werte ab
c) Der Objekt-Agent sendet für die abgefragten Datenobjekte die entsprechenden Werte, und daß, jeweils nachdem der Steuerungsrechner das verwaltete Gesamt-Objekt kontaktiert und Auskunft über dessen Funktionen verlangt hat, folgende Schritte durchgeführt werden:
d) Der Objekt-Agent veranlaßt das Zurücksenden einer Liste der vorhandenen, untergeordneten Funktionsobjekte und der zugehörigen Adressen
e) Der Steuerungsrechner kontaktiert alle Funktionsobjekte und fragt deren Parameter in Form von Parameterobjekten ab, welche im Kontext der Funktionsobjekte existierende Datenobjekte darstellen
f) Der Objekt-Agent sendet eine Liste von Funktionsobjekten und Adressen zurück
g) Der Steuerungsrechner kontaktiert jedes einzelne Parameterobjekt und fragt dessen Wert ab
h) Der Objekt-Agent sendet für jeden Parameter den entsprechenden Wert.

Weiters kann ein Programm für die Schnittstelle eines elektronisch steuerbaren Teilnehmergerätes vorgesehen sein, welchem zumindest ein Satz von Daten und programmierten Funktionen zugeordnet ist, zur Kommunikation mit einem zentralen Steuerungsrechner, der über ein Kommunikations-Netzwerk mit mehreren gleichartigen Teilnehmergeräten verbindbar und über den der Daten- und Funktionssatz jedes Teilnehmergeräts veränderbar ist

Ein oder mehrere Sätze von Daten und jeweils einer programmierten Funktion werden zu untergeordneten Sub-Programm-Objekten zusammengefaßt und gespeichert, die unabhängig voneinander zu einem oder mehreren verwalteten Gesamt-Objekten konfigurierbar sind, das bzw. die über den Struerungsrechner steuerbar sind bzw. ist.

Somit enthält jedes Teilnehmergerät des Kommunikations-Netzwerks eine beliebige Anzahl von Sub-Programm-Einheiten, die jeweils einer speziell definierten Funktion des Geräts zugeordnet sind und welche in beliebiger Weise zu einem verwalteten Gesamt-Objekt konfigurierbar sind. Dies geschieht aus der Ferne über das Kommunikations-Netzwerk und den Steuerungsrechner, mit dessen Hilfe somit jede gewünschte Kombination von untergeordneten gesteuerten Objekten zu einem Gesamt-Objekt zusammensetzbar ist, das der Funktionalität des jeweiligen Teilnehmerobjekts entspricht.

Bei einer Ausführungsform des erfindungsgemäßen Verfahrens, bei dem zumindest eine Kommunikationsschicht zu Kommunikationszwecken innerhalb des Kommunikations-Netzwerks, eine Schicht zur Anwendung bzw. Umsetzung von Funktionen des Teilnehmergeräts und eine Schicht für die Programm-Objekte definiert sind, können in weiterer Ausbildung der Erfindung die verwalteten Gesamt-Objekte in einer Schicht für Steuerobjekte gesteuert werden.

Mit solchen Steuerobjekten kann eine Steuerung der verwalteten Gesamt-Objekte auf einfache Weise vorgenommen und die vom Steuerungsrechner vorgegebenen Gerätefunktionen veranlaßt werden.

Weiters kann vorgesehen sein, daß das übergeordnete Programm-Objekt in einer weiteren Schicht aus den untergeordneten Objekten konfiguriert wird.

Auf diese Weise kann jedes übergeordnete Programm-Objekt aus einer beliebigen Anzahl von fest vorgegebenen untergeordneten Objekten konfiguriert werden.

Nachfolgend wird die Erfindung anhand des in den Zeichnungen beschriebenen Ausführungsbeispiels eingehend erläutert. Es zeigt dabei
Fig.1 ein Blockschaltbild eines Ausführungsbeispiels des erfindungsgemäßen Übertragungssystems;
Fig.2 ein Schichtenmodell der Datenorganisation des Ausführungsbeispiels gemäß Fig.1 und
Fig.3 eine schematische Darstellung der gesteuerten und der verwalteten Objekte, wie sie in einer Ausführungsform des erfindungsgemäßen Programms definiert sind.

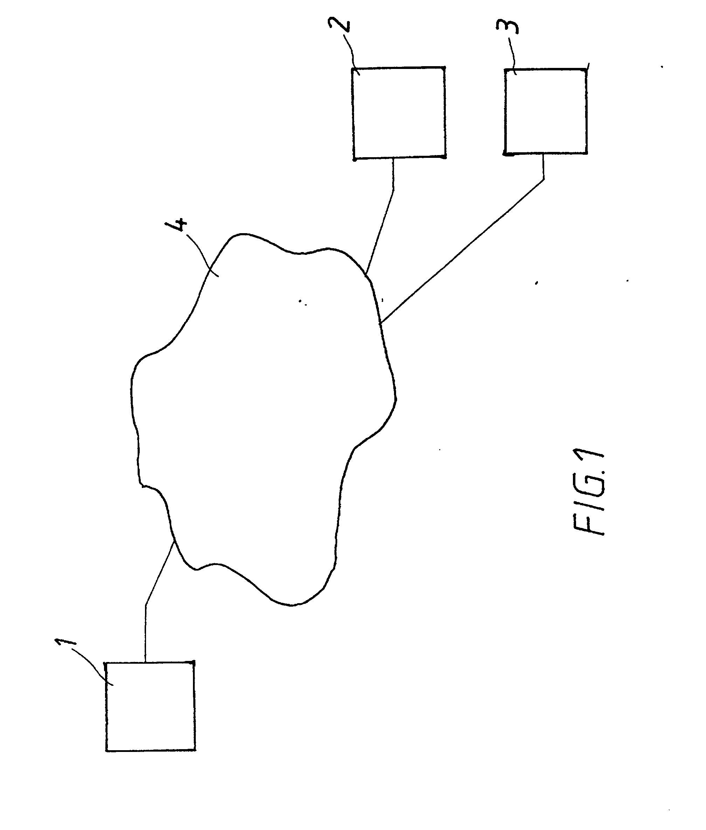

Fig.1 zeigt ein Übertragungssystem zur Ferneinstellung von elektronisch steuerbaren Teilnehmergeräten 2, 3, die über ein Kommunikations-Netzwerk 4 mit einem zentralen Steuerungsrechner 1 verbunden sind. Innerhalb eines solchen Kommunikations-Netzwerks ist sowohl die separate Übertragung von Daten, Sprache und Bildinformation als auch die kombinierte Form derselben Übertragungsformen als Multimedia-Übertragungen möglich. Dies umfaßt einerseits die Kommunikation zwischen beliebigen Teilnehmern und andererseits die Kommunikation von einem zentralen Punkt im Kommunikations-Netzwerk 4 zu einer Vielzahl von Teilnehmern, die mitunter als Broadcast-Funktion bezeichnet wird.

Die Anzahl der an diesem Übertragungssystem angeschlossenen Teilnehmergeräte kann beliebig gewählt und verändert werden. Die Teilnehmergeräte selbst können beliebige Geräte mit elektronischer Steuerung sein, die für bestimmte Zwecke an ihrem Aufstellungsort vorgesehen sind, so können die Teilnehmergeräte als Haushaltsgeräte, wie z.B. Fernsehgeräte, Videorecorder, Mikrowellenherde o.ä., Rechner, Telephonnebenstellenanlagen o.ä. ausgebildet sein. Für jede dieser Einrichtungen bestehen verschiedene Einstellmöglichkeiten, über welche deren Funktionen verändert oder ein- und ausschaltbar sind. Als Beispiel für das Teilnehmergerät 2 kann hier eine Telephonnebenstellenanlage genannt werden, welche bestimmte Funktionsarten für den Betreiber ermöglicht. Die Telephonnebenstellenanlage ist mit dem öffentlichen Telephonnetz verbunden, welches auch die Übertragung von Daten ermöglicht und daher dem Kommunikations-Netzwerk 4 entspricht. Um nun die Einstellungen an der Nebenstellenanlage von einem entfernten Ort aus ausführen zu können, ist der zentrale Steuerungsrechner 1 vorgesehen. Voraussetzung dafür ist die Kommunikationsfähigkeit zwischen dem Steuerungsrechner 1 und dem Teilnehmergerät 2, die durch ein gemeinsames Protokoll der Datenübertragung und geeignete Schnittstellen gewährleistet wird. Mit Hilfe des zentralen Steuerungsrechners 1 können die verschiedensten Einstellungen vorgenommen werden, ohne daß vor Ort die Anwesenheit eines Service-Technikers erforderlich ist. Ohne weitere Hilfsmaßnahmen am Aufstellungsort der Nebenstellenanlage kann eine Datenübertragung zwischen dieser und dem zentralen Steuerungsrechner 1 hergestellt werden und unterschiedliche Vorgänge in der Nebenstellenanlage in Gang gesetzt werden.

Das Kommunikations-Netzwerk 4 ist jedoch nicht auf das öffentliche Telephonnetz beschränkt, es kann jedes beliebige Kommunikations-Netzwerk, z.B. LAN, WAN, ATM, X.25, Internet o.ä. für die Übertragung der Daten sein. So kann auch das Stromnetz eines Haushalts als entsprechendes Netzwerk verwendet werden, um an verschiedenen Aufstellungsorten vorhandene Haushaltsgeräte mit dem zentralen Steuerungsrechner 1 zu verbinden und Einstellungen an diesen vorzunehmen.

Den Teilnehmergeräten des Übertragungssystems ist jeweils zumindest ein Satz von Daten und programmierten Funktionen zugeordnet, welcher Daten- und Funktionssatz über den zentralen Steuerungsrechner 1 veränderbar ist und Teil einer Schnittstelle zum Steuerungsrechner bildet, sodaß der Daten- und Funktionssatz über ein im Steuerungsrechner enthaltenes Steuerprogramm veränderbar ist.

Bei bisher bekannten Anwendungen wird jeweils ein Teilnehmergerät als zumindest ein "verwaltetes" Objekt angesehen, das einem Daten- und Funktionssatz entspricht, welcher im Teilnehmergerät gespeichert ist. Dabei müssen gleiche Funktionen für unterschiedliche Teilnehmergeräte jeweils immer gesondert programmiert werden. Jeder programmierten Funktion sind innerhalb des Objekts bestimmte funktionsspezifische Daten zugeordnet, die bei der ersten Inbetriebnahme des Teilnehmergeräts voreingestellt werden und später über den Steuerungsrechner 1 verändert werden können.

Anhand eines analogen Telephonapparates, eines ISDN-Telephonapparates und eines digitalen Telephonapparates seien nachfolgend die verschiedenen auswählbaren bzw. sperrbaren Funktionen eines Teilnehmergeräts beispielhaft erläutert.

### Analoger Telephonapparat:

1) Rufart (Rufsequenz für interne bzw. externe Gespräche)
2) Rufweiterleitung
3) Ruf-Lautstärke
4) -
5) -
6) Wahlverfahren Impulswahl/MFV

### ISDN-Telephonapparat:

1) Rufart (Rufsequenz für interne bzw. externe Gespräche)
2) Rufweiterleitung
3) Ruf-Lautstärke
4) Anrufer-Identitätserkennung
5) -
6) -

### Digitales Telephon:

1) Rufart (Rufsequenz für interne bzw. externe Gespräche)
2) Rufweiterleitung
3) Ruf-Lautstärke
4) -
5) Nummern-Speicher
6) -

Die Funktionen Rufart, Rufweiterleitung, Ruf-Lautstärke sind für alle Teilnehmergeräte gleich, müssen aber nach dem Stand der Technik für jedes Teilnehmergerät gesondert am Steuerungsrechner und in der Nebenstellenanlage programmiert werden, um einer Überwachung und Steuerung des zentralen Steuerungsrechners 1 zugänglich zu sein.

Auch für Haushaltsgeräte kann eine ähnliche Unterteilung getroffen werden. So sind die Funktionen Stand-By/Ein-Schalter, Lautstärke, Datumseinstellung u.ä. für eine Reihe von unterschiedlichen Geräten wie Fernsehapparat, Video-Recorder, Stereo-Anlage identisch, müssen aber alle gesondert am Steuerungsrechner und in den einzelnen Geräten programmiert werden.

Wird ein neues Teilnehmergerät oder eine neuartiger Gerätetyp eines Teilnehmergeräts in das Übertragungssystem aufgenommen, so muß jeweils ein neuer Datenund Funktionensatz erstellt bzw. programmiert werden, auch wenn einzelne Funktionen bereits in anderen Teilnehmergeräten oder im Vorgänger-Gerätetyp des Teilnehmergeräts existieren. Die Änderungen bzw. neuen Einstellungen müssen dabei im zentralen Steuerungsrechner und im neuen Teilnehmergerät vorgenommen werden. Dies erfordert regelmäßig einen sehr hohen Arbeitsaufwand, der vor allem für Änderungen des Quellenkodes in verschiedenen Dateien anfällt.

Erfindungsgemäß umfaßt der zumindest eine Daten- und Funktionssatz eines jeden Teilnehmergeräts 2, 3 des Übertragungssystems zumindest einen untergeordneten Satz von Daten und jeweils einer programmierten Funktion, der über den Steuerungsrechner 1 direkt veränderbar ist, wobei der Funktionssatz jedes untergeordneten Daten- und Funktions-Satzes mit gleicher programmierter Funktion innerhalb des Übertragungssystems identisch definiert ist.

Die untergeordneten Daten- und Funktionssätze sind dabei jeweils ein Teil des gesamten Daten- und Funktionensatzes, werden einmal definiert und können nach Bedarf wie bei einem Baukasten zu einem ganzen Daten- und Funktionensatz für ein Teilnehmergerät zusammengestellt werden. Änderungen und Erweiterungen betreffen damit immer nur den der zu ändernden Funktion entsprechenden Daten- und Funktions-Untersatz. Dabei können auch verschiedene Betriebs- oder Alarmzustände von den Teilnehmergeräten an den zentralen Steuerungsrechner mitgeteilt werden, die für alle Teilnehmergeräte gleich definiert sind.

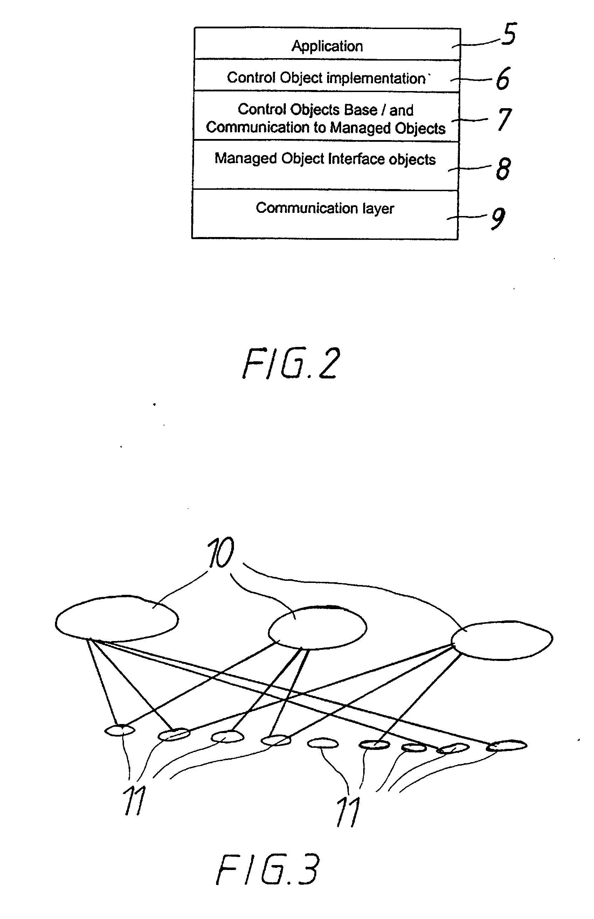

In Fig.2 ist die Organisation der verschiedenen Schichten für den Datenverkehr zwischen einem Teilnehmergerät 2, 3 und dem zentralen Steuerungsrechner 1 in Form eines Schichtenmodells dargestellt. Schicht 9 ist eine Kommunikationsschicht, welche die Datenübertragung innerhalb des Kommunikations-Netzwerks 4 ermöglicht und z.B. auf CORBA basierend festgelegt sein kann.

Dazu ist ein Programm für diese Schnittstelle des Teilnehmergerätes vorgesehen, das zur Kommunikation mit dem zentralen Steuerungsrechner 1 dient, der über das Kommunikations-Netzwerk 4 mit mehreren gleichartigen Teilnehmergeräten 2,3 verbindbar und über den der Daten- und Funktionssatz jedes Teilnehmergeräts 2, 3 veränderbar ist.

In der Schicht 5 werden die aus den verwalteten Objekten abrufbaren Funktionen im Teilnehmergerät umgesetzt bzw. zur Anwendung gebracht. Das jeweilige Teilnehmergerät ist über das oder die verwalteten Objekte steuerbar, wobei die innere Gerätestruktur nicht den verwalteten Objekten entsprechen muß, in vielen Fällen wird eine Veränderung bei einem verwalteten Objekt auch Auswirkungen in anderen verwalteten Objekten herbeiführen. Diese Auswirkungen sind dargestellt und programmiert in Steuerobjekten der Schicht 6, welche für die Steuerung der verwalteten Objekte verantwortlich sind. Die in den verwalteten Objekten vorherrschende Hierarchie ist von jener der Steuerobjekte verschieden. Die Steuerobjekte können verwaltete Objekte erzeugen oder vernichten oder die Veränderung von Daten bzw. Funktionen der verwalteten Objekte modifizieren.

Die Funktionen der verwalteten Objekte verfügen über eine Liste von gerätetypischen Parametern, die abhängig vom jeweils verwalteten Objekt ist, auch wenn die auszuführende Funktion von ihrer Bedeutung her das gleiche ausführt. Zum Beispiel konfiguriert die Funktion "configure" eine bestimmte Baugruppe. Die Konfigurationsparameter für jede Baugruppe sind verschieden, aber die Bedeutung der Funktion und das Verhalten gegenüber dem Steuerungsrechner ist immer gleich.

Für die Kommunikation zwischen den verwalteten Objekten und den Steuerobjekten ist eine Schicht 7 vorgesehen. Die verwalteten Objekte der Schicht 8 setzen sich, wie vorstehend bereits beschrieben, aus Daten und Funktionen zusammen. Diese Daten sind grundsätzlich nur lesbar und können ausschließlich über Funktionen gesetzt werden. Ein verwaltetes Objekt hat damit immer die Kontrolle über die Werte seiner Daten. Funktionen können ihrerseits Parameter aufweisen, um den Zustand und das Verhalten von Objekten zu beeinflussen.

Ein verwaltetes Objekt ist dabei in standardisierte untergeordnete Objekte zerlegt. Letztere können wie folgt unterteilt sein:
Sammel-Objekt: Dieses dient als Container für das verwaltete Objekt und enthält einen Satz von Referenzen zu Daten und Funktionen.
Daten-Objekt: Objekt zur Beschreibung von Daten
Funktions-Objekt: Objekt zur Beschreibung einer Funktion

Die untergeordneten Objekte stellen die Schnittstelle zu dem verwalteten Gesamt-Objekt dar, über sie können Veränderungen bzw. Abfragen an dem oder den verwalteten Objekten des jeweiligen Teilnehmergeräts durchgeführt werden. Im vorstehenden Beispiel wird eine Abfrage von Zuständen oder Adressen, an denen Daten zu finden sind, über das Item-Objekt (Agent) durchgeführt.

Die Kommunikation zwischen dem Steuerungsrechner 1 und einem neuen Agenten kann auf die folgende beispielhafte Weise durchgeführt werden:
1) Der Steuerungsrechner kontaktiert das verwaltete Objekt und verlangt Auskunft über dessen Daten
2) Der Agent veranlaßt das Zurücksenden einer Liste der vorhandenen, untergeordneten Datenobjekte und der zugehörigen Adressen.
3) Der Steuerungsrechner kontaktiert alle Datenobjekte einzeln bzw. entsprechend einer Liste von Datenobjekten und fragt deren Werte ab.
4) Der Agent sendet für die abgefragten Datenobjekte die entsprechenden Werte.
5) Der Steuerungsrechner kontaktiert das verwaltete Objekt und verlangt Auskunft über dessen Funktionen.
6) Der Agent veranlaßt das Zurücksenden einer Liste der vorhandenen, untergeordneten Funktionsobjekte und der zugehörigen Adressen.
7) Der Steuerungsrechner kontaktiert alle Funktionsobjekte und fragt deren Parameter, ab.
8) Der Agent sendet eine Liste von Funktionsobjekten und Adressen zurück.
9) Der Steuerungsrechner kontaktiert jedes einzelne Parameterobjekt und fragt dessen Wert ab.
10) Der Agent sendet für jeden Parameter den entsprechenden Wert.

Beim Starten einer Funktion geht der folgende Ablauf vor sich:
1)Der Steuerungsrechner setzt die Parameter-Objekte auf die entsprechenden Werte.
2)Der Steuerungsrechner kontaktiert das untergeordnete Funktionsobjekt und startet die gewählte Funktion.
3)Das Funktionsobjekt liefert eine Funktionsstatus. Der eigentliche Funktionsaufruf wird über das angeschaltete Steuerobjekt durchgeführt.

Erfindungsgemäß ist beim Programm für die Schnittstelle des Teilnehmergeräts vorgesehen, daß ein oder mehrere Sätze von Daten und jeweils einer programmierten Funktion (Fig.3) zu untergeordneten Sub-Programm-Einheiten 11 zusammengefaßt und gespeichert sind, die unabhängig voneinander zu einem oder mehreren verwalteten Gesamt-Objekten 10 konfigurierbar sind, das bzw. die über den Steuerungsrechner 1 steuerbar ist bzw. sind.

Die weitere Schicht 6 ist für die Steuerobjekte zur Steuerung der verwalteten Gesamt-Objekte definiert. Die dazwischenliegende Schicht 7 ist für die Konfigurierung des übergeordneten Programm-Objekts der Schicht 8 aus den untergeordneten, gesteuerten Objekten definiert, wobei die Daten- und Funktionssätze mittels einer eigenen Beschreibungssprache verwaltet werden können. Diese enthält die Definition der verwalteten und der gesteuerten Objekte und der Rangordnung, in der diese angeordnet sind.

## Patentansprüche

1. Verfahren zum Konfigurieren eines elektronisch steuerbaren Teilnehmergerätes, welchem zumindest ein Satz von Daten und programmierten Funktionen zugeordnet ist, zur Kommunikation mit einem zentralen Steuerungsrechner, der über ein Kommunikations-Netzwerk mit mehreren gleichartigen Teilnehmergeräten verbindbar und über den der Datenund Funktionssatz jedes Teilnehmergeräts veränderbar ist, wobei ein oder mehrere Sätze von Daten und jeweils einer programmierten Funktion zu untergeordneten Sub-Programm-Objekten zusammengefaßt und gespeichert sind, die unabhängig voneinander zu einem oder mehreren verwalteten Gesamt-Objekten konfigurierbar sind, das bzw. die über den Steuerungsrechner steuerbar ist bzw. sind, **dadurch gekennzeichnet, daß** der Steuerungsrechner (1) zunächst eines der verwalteten Gesamt-Objekte des zu konfigurierenden Teilnehmergeräts kontaktiert und Auskunft über dessen Daten verlangt, und daß der Steuerungsrechner (1) nach Erhalt der Daten das verwaltete Gesamt-Objekt kontaktiert und Auskunft über dessen Funktionen verlangt.

2. Verfahren nach Anspruch 1, **dadurch gekennzeichnet, daß**, jeweils nachdem der Steuerungsrechner (1) das verwaltete Gesamt-Objekt kontaktiert und Auskunft über dessen Daten verlangt hat, folgende Schritte durchgeführt werden:
a) Ein für das verwaltete Gesamt-Objekt zuständiger Objekt-Agent veranlaßt das Zurücksenden einer Liste der vorhandenen, untergeordneten Datenobjekte und der zugehörigen Adressen
b) Der Steuerungsrechner (1) kontaktiert alle Datenobjekte einzeln bzw. entsprechend einer Liste von Datenobjekten und fragt deren Werte ab
c) Der Objekt-Agent sendet für die abgefragten Datenobjekte die entsprechenden Werte,
und daß, jeweils nachdem der Steuerungsrechner (1) das verwaltete Gesamt-Objekt kontaktiert und Auskunft über dessen Funktionen verlangt hat, folgende Schritte durchgeführt werden:
d) Der Objekt-Agent veranlaßt das Zurücksenden einer Liste der vorhandenen, untergeordneten Funktionsobjekte und der zugehörigen Adressen
e) Der Steuerungsrechner kontaktiert alle Funktionsobjekte und fragt deren Parameter in Form von Parameterobjekten ab, welche im Kontext der Funktionsobjekte existierende Datenobjekte darstellen
f) Der Objekt-Agent sendet eine Liste von Funktionsobjekten und Adressen zurück
g) Der Steuerungsrechner kontaktiert jedes einzelne Parameterobjekt und fragt dessen Wert ab
h) Der Objekt-Agent sendet für jeden Parameter den entsprechenden Wert.

3. Verfahren nach Anspruch 1 oder 2, wobei zumindest eine Kommunikationsschicht (9) zu Kommunikationszwecken innerhalb des Kommunikations-Netzwerks, eine Schicht zur Anwendung bzw. Umsetzung von Funktionen des Teilnehmergeräts (5) und eine Schicht für Programm-Objekte (8) definiert sind, **dadurch gekennzeichnet, daß** die verwalteten Gesamt-Objekte in einer Schicht (6) für Steuerobjekte gesteuert werden.

4. Verfahren nach Anspruch 3, **dadurch gekennzeichnet, daß** das übergeordnete Programm-Objekt in einer weiteren Schicht (7) aus den untergeordneten Objekten konfiguriert wird.

## Claims

1. A method for configuring an electronically controllable subscriber terminal, to which is assigned at least one record of data and programmed functions, for communication with a central control computer which can be connected via a communications network with several similar subscriber terminals and through which the data and functional records of each subscriber terminal can be changed, with one or several records of data and one programmed function each being combined into and stored as subordinate sub-program objects which can be configured independent of each other into one or several managed total objects which is or are controllable through the control computer, **characterized in that** the control computer (1) of at first one of the managed total objects of the subscriber terminal to be configured is contacted and demands information on its data and that the control computer (1), after receipt of the data, contacts the managed total object and demands information on its functions.

2. A method as claimed in claim 1, **characterized in that** after the control computer (1) has contacted the managed total object and has demanded information on its data, the following steps are performed:
a) an object agent responsible for the managed total object initiates the return transmission of a list of the current subordinate data objects and the associated addresses;
b) the control computer (1) contacts all data objects individually or according to a list of data objects and queries their values;
c) the object agent transmits the respective values for the queried data objects;
and that after the control computer (1) has contacted the managed total object and has demanded information on its data the following steps are performed:
d) the object agent initiates the return transmission of a list of current subordinate functional objects and the associated addresses;
e) the control computer (1) contacts all functional objects and queries their parameters in the form of parameter objects which represent data objects which exist in the context of the functional objects;
f) the object agent transmits back a list of functional objects and addresses;
g) the control computer contacts every single parameter object and queries its value;
h) the object agent sends the respective value for each parameter.

3. A method as claimed in claim 1 or 2, with at least one communications layer (9) being defined for communications purposes with the communications network, one layer for application or implementation of functions of the subscriber terminal (5) and one layer for program objects (8), **characterized in that** the managed total objects are controlled in a layer (6) for control objects.

4. A method as claimed in claim 3, **characterized in that** the superset program object is configured in a further layer (7) from the subordinate objects.

## Revendications

1. Procédé pour la configuration d'un terminal d'abonné pouvant être commandé électroniquement, auquel est associé au minimum un ensemble de données et de fonctions programmables, pour la communication avec un ordinateur de commande central qui peut être relié par un réseau de communication à plusieurs terminaux d'abonnés similaires et qui peut modifier l'ensemble de données et de fonctions de chaque terminal d'abonné, un ou plusieurs ensembles de données et une fonction programmable pour chacun étant réunis et enregistrés en mémoire indépendamment les uns des autres sous forme de sous-objets de programme subordonnés pouvant être configurés indépendamment les uns des autres pour former un ou plusieurs objets d'ensemble administrés qui peuvent être commandés par l'ordinateur de commande, **caractérisé en ce que** l'ordinateur de commande (1) contacte d'abord l'un des objets d'ensemble administrés du terminal d'abonné à configurer et demande des informations sur les données de celui-ci, et **en ce que** l'ordinateur de commande (1), après avoir obtenu les données, contacte l'objet d'ensemble administré et demande des informations sur les fonctions de celui-ci.

2. Procédé selon la revendication 1, **caractérisé en ce qu'**après que l'ordinateur de commande (1) a contacté l'objet d'ensemble administré et demandé les données de celui-ci, les opérations suivantes sont exécutées :
a) un agent d'objet pertinent pour l'objet d'ensemble administré commande le renvoi d'une liste des objets de données subordonnés existants et des adresses correspondantes,
b) l'ordinateur de commande (1) contacte tous les objets de données un par un selon une liste des objets de données et en consulte les valeurs,
c) l'agent d'objet renvoie des valeurs correspondant aux objets de données consultés,
et **en ce que**, après que l'ordinateur de commande (1) a contacté l'objet d'ensemble administré et demandé des informations sur ses fonctions, les opérations suivantes sont exécutées :
d) l'agent d'objet commande le renvoi d'une liste des objets de fonction subordonnés existants et des adresses correspondantes,
e) l'ordinateur de commande contacte tous les objets de fonction et consulte leurs paramètres sous forme d'objets de paramètres qui représentent des objets de données existants dans le contexte des objets de fonction,
f) l'agent d'objet renvoie une liste d'objets de fonction et d'adresses,
g) l'ordinateur de commande contacte chaque objet de paramètres et consulte sa valeur,
h) l'agent d'objet envoie la valeur correspondant à chaque paramètre.

3. Procédé selon la revendication 1 ou 2, dans lequel sont définies au moins une couche de communication (9) destinée à la communication à l'intérieur du réseau de communication, une couche pour l'application ou la transformation de fonctions du terminal d'abonné (5) et une couche pour les objets de programme (8), **caractérisé en ce que** les objets d'ensemble gérés sont commandés dans une couche (6) pour les objets de commande.

4. Procédé selon la revendication 3, **caractérisé en ce que** l'objet de programme supérieur est configuré dans une autre couche (7) à partir des objets subordonnés.
